# EUROPEAN PATENT SPECIFICATION

(11) **EP 0 708 717 B1**
(45) Date of publication and mention of the grant of the patent: **12.03.1997**
(21) Application number: 94921868.9
(22) Date of filing: 11.07.1994
(51) Int. Cl.: B60N 2/06, B60N 2/08

(54) **A VEHICLE SEAT LOCKING SYSTEM**
SYSTEM ZUM VERRIEGELN EINES FAHRZEUGSITZES
SYSTEME DE VERROUILLAGE D'UN SIEGE DE VEHICULE

(30) Priority: 12.07.1993 NO 932534
(43) Date of publication of application: 01.05.1996
(73) Proprietor: NORSK HYDRO A/S, 0240 Oslo 2 (NO)
(72) Inventor: CLAUSEN, Edvin, List, DK-6270 T nder (DK)
(74) Representative: Kraus, Jürgen Helmut, Dipl.-Phys. Dr.
(86) International application number: PCT/NO94/00124
(87) International publication number: WO 95/02520

(56) References cited:
- DE-A- 2 254 557
- DE-C- 858 362
- DE-C- 3 414 649
- US-A- 4 168 051
- US-A- 4 958 799

## Description

The present invention relates to a vehicle seat locking and adjustment system typically applied on the front seats of personal vehicles as set forth in the preamble of claim 1 (see for example US-A-4 168 051).

A number of different seat locking and adjustment systems are presently known and applied in vehicles. However, all the presently known systems are characterized by a high degree of complexity (many components) and application of several different materials, something resulting in heavy and expensive systems due to a laborious manufacturing and assembling process.

It is therefore an object of the present invention to provide a simplified and light weight seat locking/adjustment system avoiding the above drawbacks.

This object is achieved in accordance with the present invention by provision of a seat locking and adjustment system as defined by the accompanying patent claim 1. Further features of the invention are given in dependent claims 2-7.

Other objects, specific features and advantages of the present invention will be apparent from the following detailed description of preferred embodiments with reference to the accompanying drawings, Figs. 1-6, where
- Fig. 1: is a perspective schematical side view of a system embloyable in the present invention,
- Fig. 2: shows schematically in an end view the locking means of the system,
- Fig. 3: is an enlarged fragmentary cross-sectional view illustrating the fastening principle of the pivotally anchored locking means shown in Fig. 2,
- Fig. 4: is an enlarged fragmentary cross-sectional view of an alternative way of anchoring the locking means.
- Fig. 5: shows schematically in a perspective side view another embodiment of the locking system, and where
- Fig. 6: is a vertical cross-sectional view of the locking means from Fig. 5.

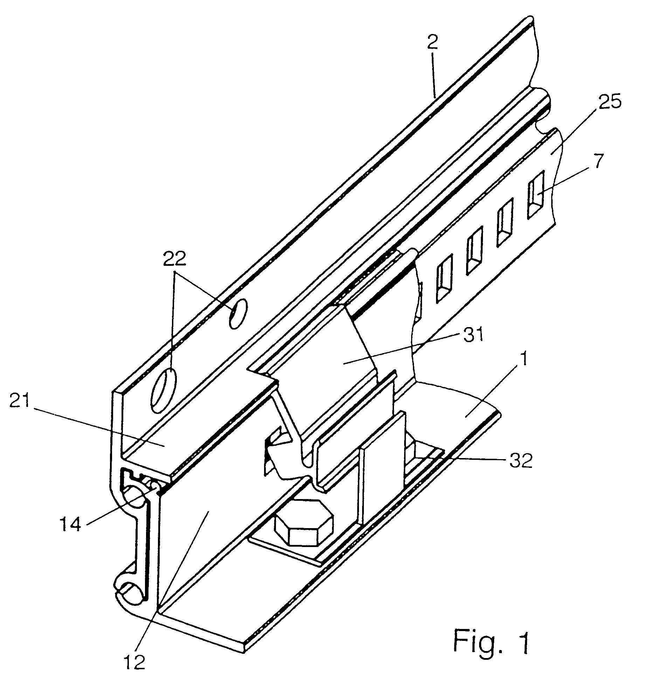

Referring to the drawings and particularly to Fig. 1, the vehicle locking/adjustment system comprises a first rail 1 customarily fastened to the vehicle floor (not shown in the Figure) and a slideably attached second rail 2 provided with aperture (fastening means) 22 for a seat and safety belt attachment. An integral coextruded flange for end stop 21 extends perpendicularly along a predetermined longitudinal extension of the second rail and defines the travel range of the second rail abutting a tiltable locating member 31.

A number of complementary shaped apertures 7 is provided in the adjacent walls 12 and 25 of the first and second rail, respectively, designed to engage the tiltable locating member 31. The tiltable member itself is anchored by grasping around a protrusion 14 being integrally provided (extruded) in the wall 12 of the first rail 1.

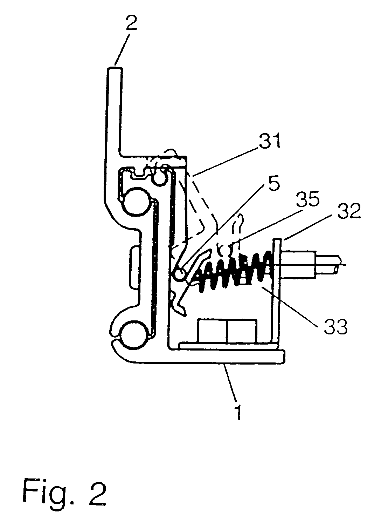

Fig. 2 shows schematically in more details in an end view the interlocking principle between the rails 1 and 2 from Fig. 1. The tiltable locating member 31 shown in a "locked" and "free" (as depicted by the hatched line) position is held in position by means of a conventional cable guided (controlled) spring 33 being part of the stationary locking means 32 attached to the first rail 1.

According to a particularly advantageous embodiment the tiltable locating member 31 is extruded with a groove 35 providing accomodation and attachment of the guiding cable 5.

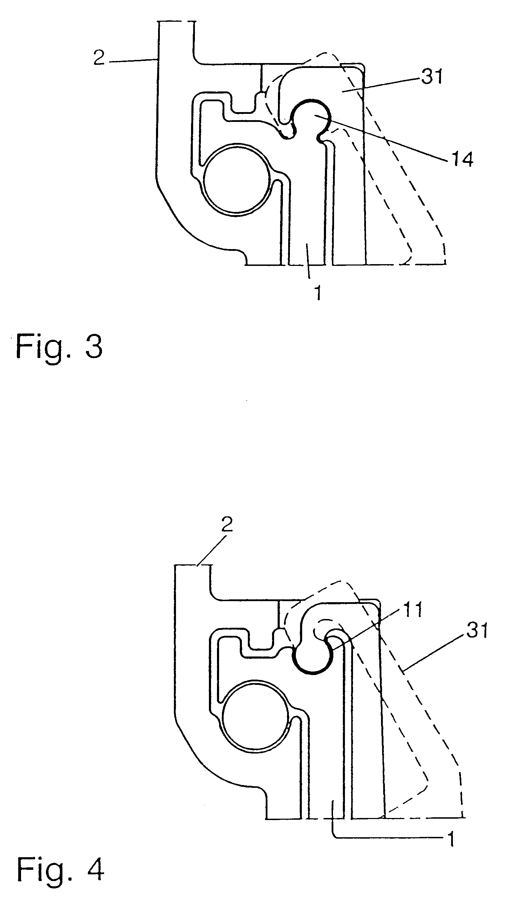

Fig. 3 illustrates in an enlarged fragmentary cross-sectional view the fastening principle for the pivotal movement/anchoring of the locating member 31 into a protrusion 14 integrally provided in the first rail 1.

Fig. 4 illustrates an alternative fastening principle for the pivotal movement/anchoring of the locating member 31 into a groove 11 integrally provided in the first rail 1,

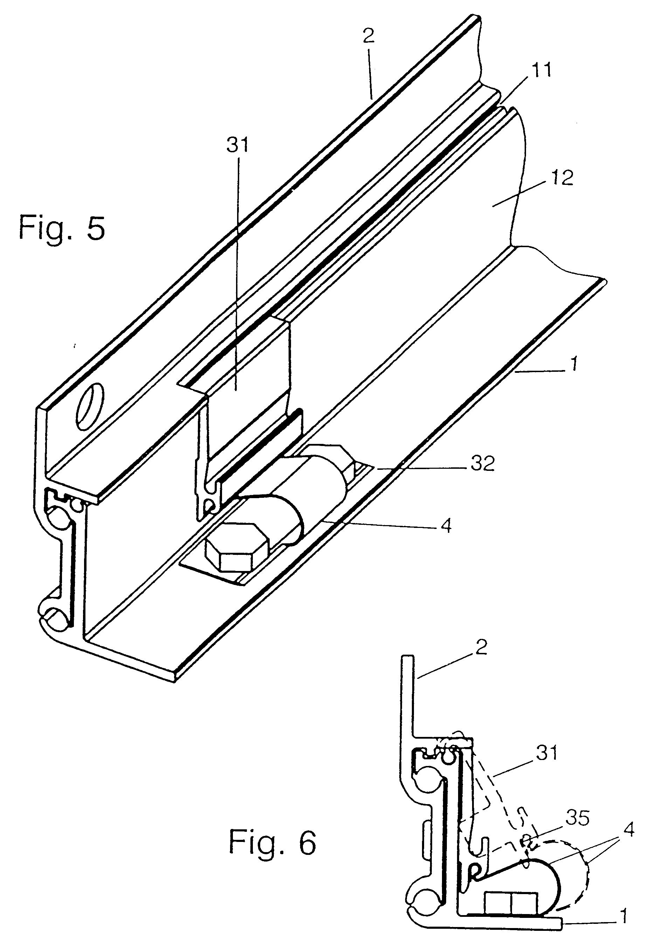

Another employable embodiment of the locking system is shown in Fig. 5. The rails 1,2 are interlocked by means of a tiltable locating member 31 being pivotally attached to the first rail 1 by anchoring into a slot or groove 11. A leaf spring 4 is in this case employed instead of the cable guided spiral spring in Fig. 2.

As can be seen from Fig. 6, illustrating in more details the leaf spring arrangement 4 shown in a cross-sectional vertical view, the tiltable locking member 31 has a coextruded longitudinal groove 35 that holds the spring in position.

As it appears from the above description of employable embodiments of the present invention, the new locking system, based on guiding function and fastening means being integrated in a special and inventive design of the seat rail components, offers a simplified construction eliminating the need of special/individual stop brackets etc., thus reducing the number of system components. Furthermore, in a particularly advantageous embodiment of the locking/adjustment system all components are provided as extrusions made of aluminium or Al-alloys. This solution offers a possibility inherent in the applied extrusion technique to "tailor" an integral design of the rails with all details resulting in a weight reduction of the system.

The above discussion has been related to the specific embodiments of the system as illustrated by the accompanying Figures. It is, however, contemplated that the present invention is equally applicable to other configurations and embodiments, and various changes and modifications may be made to the specifically described and illustrated arrangements if not departing from the scope of the present invention as defined by the appended claims.

## Claims

1. A vehicle seat locking/adjustment system comprising a first rail (1) and a second rail (2) slideably attached to the first rail (1) and a means for mutual interlocking of the rails (1,2), wherein the interlocking means comprises a tiltable locating member (31) being pivotally anchored in fastening means (11) and interacting perpendicularly with complementary shaped apertures (7) provided in the adjacent walls (12,25) of the rails (1,2) over their longitudinal extension,
**characterized in** that
the fastening means (11,14) extends longitudinally along the first rail (1) and is an integral part of said first rail (1).

2. The system according to claim 1,
**characterized in** that
the second rail (2) is further provided with an integral stop flange (21) defining the travel range of the rail and the attached vehicle seat.

3. The system according to claim 1,
**characterized in** that
the fastening means (11) is provided as an integral groove in the rail (1).

4. The system according to claim 1,
**characterized in** that
the fastening means (14) is provided as an integral protrusion in the rail (1).

5. The system according to claim 1,
**characterized in** that
the locating member (31) is integrally provided with a groove (35) for cable attachment.

6. The system according to claim 1,
**characterized in** that
the locating member (31) is integrally provided with a groove/flange (35) for a leaf spring (4).

7. The system according to one or more preceding claims 1-6,
**characterized in** that
the rails (1,2) and the interlocking tiltable member (31) are provided as extruded shapes in a light metal.

## Patentansprüche

1. Fahrzeugsitzverriegelungs-/-einstellungsystem mit einer ersten Schiene (1) und einer an der ersten Schiene (1) verschiebbar befestigten zweiten Schiene (2) und einer Einrichtung zur gegenseitigen Verriegelung der Schienen (1, 2), wobei die Verriegelungseinrichtung ein schwenkbares Festlegungselement (31) aufweist, das schwenkbar in einer Befestigungseinrichtung (11) verankert ist und senkrecht mit komplementär geformten Öffnungen (7) zusammenwirkt, die in den benachbarten Wänden (12, 25) der Schienen (1, 2) über ihre Längserstreckung vorgesehen sind,
dadurch gekennzeichnet, daß
sich die Befestigungseinrichtung (11, 14) längs entlang der ersten Schiene (1) erstreckt und ein integraler Teil der ersten Schiene (1) ist.

2. System nach Anspruch 1, dadurch gekennzeichnet, daß die zweite Schiene (2) ferner mit einem integralen Anschlagflansch (21) versehen ist, der den Bewegungsbereich der Schiene und des daran befestigten Fahrzeugsitzes festlegt.

3. System nach Anspruch 1, dadurch gekennzeichnet, daß die Befestigungseinrichtung (11) als integrale Rille in der Schiene (1) vorgesehen ist.

4. System nach Anspruch 1, dadurch gekennzeichnet, daß die Befestigungseinrichtung (14) als integraler Vorsprung in der Schiene (1) vorgesehen ist.

5. System nach Anspruch 1, dadurch gekennzeichnet, daß das Festlegungselement (31) integral mit einer Rille (35) zur Kabelbefestigung vorgesehen ist.

6. System nach Anspruch 1, dadurch gekennzeichnet, daß das Festlegungselement (31) integral mit einer Rille / einem Flansch (35) für eine Blattfeder (4) versehen ist.

7. System nach einem oder mehreren der vorhergehenden Ansprüche 1 bis 6, dadurch gekennzeichnet, daß die Schienen (1, 2) und das schwenkbare Verriegelungselement (31) als extrudierte Formen in Leichtmetall vorgesehen sind.

## Revendications

1. Ensemble de blocage et d'ajustement d'un siège d'un véhicule, comprenant un premier rail (1) et un second rail (2) fixé afin qu'il puisse coulisser sur le premier rail (1), et un dispositif d'emboîtement des rails (1, 2) tel que le dispositif d'emboîtement possède un organe (31) de positionnement qui peut pivoter en étant fixé de manière pivotante dans un dispositif (11) de fixation et interagissant perpendiculairement à des orifices (7) de forme complémentaire réalisés dans les parois adjacentes (12, 25) des rails (1, 2) suivant leur longueur,
caractérisé en ce que le dispositif de fixation (11, 14) est placé longitudinalement le long du premier rail (1) et est solidaire du premier rail (1).

2. Ensemble selon la revendication 1, caractérisé en ce que le second rail (2) possède en outre un flasque solidaire (21) d'arrêt délimitant la plage de déplacement du rail et du siège de véhicule qui lui est fixé.

3. Ensemble selon la revendication 1, caractérisé en ce que le dispositif de fixation (11) comporte une gorge formée dans le rail (1) et qui en est solidaire.

4. Ensemble selon la revendication 1, caractérisé en ce que le dispositif de fixation (14) est formé d'une saillie solidaire du rail (1).

5. Ensemble selon la revendication 1, caractérisé en ce que l'organe de positionnement (31) est réalisé en une seule pièce avec une gorge (35) de fixation d'un câble.

6. Ensemble selon la revendication 1, caractérisé en ce que l'organe de positionnement (31) est solidaire d'un ensemble à gorge et flasque (35) destiné à un ressort à lame (4).

7. Ensemble selon l'une ou plusieurs des revendications 1 à 6, caractérisé en ce que les rails (1, 2) et l'organe d'emboîtement qui peut pivoter (31) sont des profilés de métal léger.
